# EUROPÄISCHE PATENTSCHRIFT

(11) **EP 3 064 894 B1**
(45) Veröffentlichungstag und Bekanntmachung des Hinweises auf die Patenterteilung: **17.04.2019**
(21) Anmeldenummer: 16158478.4
(22) Anmeldetag: 03.03.2016
(51) Int. Cl.: G01B 11/25, A61B 5/00, A61B 5/107, E04C 2/00, G06T 17/00, G01B 11/245

(54) **3D-SCANVORRICHTUNG UND VERFAHREN ZUM BESTIMMEN EINER DIGITALEN 3D-REPRÄSENTATION EINER PERSON**
3D SCANNING DEVICE AND METHOD FOR DETERMINING A DIGITAL 3D-REPRESENTATION OF A PERSON
DISPOSITIF DE BALAYAGE EN 3D ET PROCEDE DE DETERMINATION D'UNE REPRESENTATION NUMERIQUE EN 3D D'UNE PERSONNE

(30) Priorität: 03.03.2015 DE 202015101014 U; 03.03.2015 DE 202015101011 U
(43) Veröffentlichungstag der Anmeldung: 07.09.2016
(73) Patentinhaber: Mohn Media Mohndruck GmbH, 33311 Gütersloh (DE)
(72) Erfinder: Bongartz, Götz Moritz, 33332 Gütersloh (DE); Diebold, Andreas, 33330 Gütersloh (DE)
(74) Vertreter: Bittner, Thomas L.

(56) Entgegenhaltungen:
- DE-A1-102014 011 028
- US-A1- 2002 126 295
- US-A1- 2003 042 401
- US-B1- 6 734 980
- Anonymous: "3ders.org - Artec's Shapify 3D full-body scanning booth creates custom figurines in minutes | 3D Printer News & 3D Printing News", , 26. Oktober 2014 (2014-10-26), XP055284269, Gefunden im Internet: URL:http://www.3ders.org/articles/20141026 -artec-shapify-booth-creates-3d-full-body- scans-3d-printed-custom-figurines.html [gefunden am 2016-06-28]

## Beschreibung

Die Erfindung betrifft eine 3D-Scanvorrichtung und ein Verfahren zum Bestimmen einer digitalen 3D-Repräsentation einer Person.

### Hintergrund

Aus DE 196 25 361 A1 ist ein 3D-Scanner bekannt, bei dem die Kameramodule an einem gemeinsamen Gestell angeordnet sind, das die Objektplattform überbaut.

Im Dokument DE 10 2007 007 576 A1 sind ein Verfahren und eine Vorrichtung zum Sichern eines Arbeitsraums beschrieben. Im Rahmen des Verfahrens wird ein dreidimensionales Bild vom Arbeitsraum erstellt, das dreidimensionale Bild dahingehend analysiert, ob der Ist-Zustand des Arbeitsraums von einem Soll-Zustand des Arbeitsraums abweicht, und ein erstes Signal aufgrund des analysierten dreidimensionalen Bildes erzeugt, wenn der Ist-Zustand des Arbeitsraums vom Soll-Zustand des Arbeitsraum abweicht.

Im Dokument US 2014 / 0293011 A1 ist eine 3D-Scannvorrichtung zum Erzeugen eines digitalen Modells eines Objekts offenbart. Projektoren sind vorgesehen, um Lichtmuster auf ein Zielprojekt zu projizieren, wobei das reflektierte Licht mittels Kameras erfasst wird.

Dokument US 2002/0126295 A1 offenbart eine 3D-Scanvorrichtung, bei der eine Person in einem Aufnahmeraum, der von Wandelementen umgeben ist, gescannt wird, um eine 3D-Repräsentation zu bestimmen. Hierbei wird auf die zu scannende Person ein Projektionsmuster projiziert. Ausgehend von digitalen 2D-Bildern wird für die gescannte Person eine 3D-Repräsentation bestimmt.

Auch das Dokument US 6,734,980 B1 betrifft eine 3D-Scanvorrichtung zum Scannen eines Körpers. Der Aufnahmeraum, in welchem die Person zum Scannen angeordnet ist, wird von voneinander getrennt angeordneten Wandelementen gebildet.

In Dokument US 2003/042401 A1 ist eine Digitalisierungseinrichtung offenbart, die Funktionen der Stereosicht, der 3D-Farbdigitalisierung und der Bewegungsdetektion für ein Zielobjekt kombiniert. Hierbei wird auf die Oberfläche des Zielobjekts ein Codemuster projiziert.

Die Verwendung von 3D-Scanvorrichtungen ist in Verbindung mit 3D-Druckern bekannt (www.3ders.org: Artec's Shapify 3D full-body scanning booth creates custom figurines in minutes | 3D Printer News & 3D Printing News").

In Dokument DE 10 2014 011 028 A1 ist eine mobile Präsentationswand beschrieben, die Teil eines mobilen Präsentationswandsystems ist.

### Zusammenfassung

Aufgabe der Erfindung ist es, eine 3D-Scanvorrichtung und ein Verfahren zum Bestimmen einer digitalen 3D-Repräsentation einer Person zu schaffen, die flexibel einsetzbar sind.

Zur Lösung sind ein Verfahren zum Bestimmen einer digitalen 3D-Repräsentation einer Person mittels einer 3D-Scanvorrichtung sowie eine 3D-Scanvorrichtung zum Bestimmen einer digitalen 3D-Repräsentation einer Person sowie nach den unabhängigen Ansprüchen 1 und 10 geschaffen. Alternative Ausgestaltungen sind Gegenstand von abhängigen Unteransprüchen.

Beim Bestimmen der digitalen 3D-Repräsentation können die folgenden Schritte vorgesehen sein: Bestimmen einer digitalen Ausgangsrepräsentation der zu scannenden Person, Erfassen einer Auswahl für einen Musterphänotyp, Bereitstellen einer digitalen 3D-Repräsentation für den ausgewählten Phänotyp; und Bestimmen der digitalen 3D-Repräsentation der zu scannenden Person, indem die digitale 3D-Repräsentation für den ausgewählten Musterphänotyp unter Berücksichtigung der digitalen Ausgangsrepräsentation iterativ angepasst wird. Die digitale Ausgangsrepräsentation kann in Form einer digitalen dünnen Punktwolke (Sparse Point Cloud) bereitgestellt werden.

Die 3D-Scanvorrichtung kann eine mobile Scanvorrichtung sein, welches es ermöglicht, die Vorrichtung an verschiedenen Orten auf- und abzubauen. Es kann ein Bausatz vorgesehen sein, welcher die Wandelemente und die hierin integrierten Kameramodule aufweist, so dass der Aufnahmeraum für die 3D-Scanvorrichtung flexibel aufgebaut, abgebaut und transportiert werden kann.

Die digitale 3D-Repräsentation der zu scannenden Person bildet einen elektronischen Datensatz, welcher zum Beispiel ein 3D-Gitternetz für die Person sowie hierauf applizierte Fototexturen repräsentiert. Die Fototexturen sind aus den digitalen 2D-Bildern bestimmt, die mit den Kameramodulen für die zu scannende Person aufgenommen werden.

Die Wandelemente können als mobile Stellwände gebildet sein.

Der Aufhahmeraum kann von außerhalb der Wandelemente nicht einsehbar sein.

Der Aufnahmeraum kann eine ellipsenförmige oder eine eckige Grundflächenform aufweisen.

An den Eingang und / oder den Ausgang kann sich eine Umkleidekabine anschließen.

Die Wandelemente können aus lösbar miteinander verbundenen Teilwandelementen zusammengesetzt sein.

Die Kameramodule können an den Teilwandelementen entlang vertikaler oder geneigter Anordnungslinien verteilt sein, und zwischen Anordnungen von Kameramodulen können Beleuchtungseinrichtungen zum Ausleuchten des Aufnahmeraums angeordnet sein. Die Kameramodule können entlang der Anordnungslinie äquidistant beabstandet sein. Nach dem Herstellen der Wandelemente aus den Teilwandelementen können horizontale Anordnungslinien für die Kameramodule gebildet sein. Die Beleuchtungseinrichtung kann Beleuchtungsstreifen umfassen, die sich horizontal und / oder vertikal zwischen den Kameramodulen erstrecken.

Die den Aufnahmeraum begrenzende Wand kann aus zwei Wandelementen bestehen, die im Bereich des Eingangs und des Ausgangs voneinander getrennt sind. Bei dieser Ausführungsform ist die den Aufnahmeraum begrenzende Wand aus genau zwei Wandelementen hergestellt, die ihrerseits aus lösbar miteinander verbundenen Teilwandelementen gebildet sein können.

Die Kameramodule und die Projektoren können paarweise einander zugeordnet sein. Bei dieser oder anderen Ausführungsformen können die Projektoren mit einer Lichtquelle, einer Sammellinse zur Bündelung des von der Lichtquelle abgegebenen Lichts, einem Projektionsmedium sowie einem optischen Objektiv zur Fokussierung des Projektionsmusters auf die Person gebildet sein. Das Projektionsmedium kann beispielsweise ein Film sein, auf dem sich ein Punktmuster befindet, welches mit dem Licht von der Lichtquelle durchleuchtet wird.

Die Kameramodule können jeweils in einer in die Wandelemente integrierte Aufnahmeeinheit angeordnet sein.

Die Aufhahmeeinheit kann einen Mikrocontroller aufweisen, der mit einem oder mehreren der Kameramodule datentechnisch verbunden und eingerichtet ist, das Bestimmen der 3D-Repräsentation der zu scannenden Person wenigstens teilweise auszuführen. Der Mikrocontroller kann datentechnisch mit einer zentralen Steuereinrichtung verbunden sein. Die datentechnische Verbindung ermöglicht den Austausch von elektronischen Daten. Bei dieser oder anderen Ausführungsformen können der Mikrocontroller und / oder die zentrale Steuereinrichtung eingerichtet sein, ein oder mehrere Triggersignale bereitzustellen, die die Kameramodule beim Aufnehmen der digitalen 2D-Bilder synchronisiert auslösen. Die zentrale Steuereinrichtung kann eingerichtet sein, das Bestimmen der 3D-Repräsentation der zu scannenden Person wenigstens teilweise auszuführen. Es kann vorgesehen sein, eine Auswertung der digitalen 2D-Bilder zum Teil mittels des Mikrocontrollers auszuführen, um das Bestimmen der 3D-Repräsentation mit Hilfe der zentralen Steuereinrichtung dann fortzuführen. Die zentrale Steuereinrichtung kann datentechnisch an ein Auswertungsrechnersystem koppeln, mit dem eine zentrale Servereinrichtung gebildet sein kann. Es kann vorgesehen sein, das Bestimmen der 3D-Repräsentation der zu scannenden Person wenigstens teilweise in dem Auswertungsrechnersystem auszuführen.

Die Kameramodule können mit einem zentralen Steuerrechner datentechnisch verbunden sein, der eingerichtet ist, das Bestimmen der 3D-Repräsentation der zu scannenden Person wenigstens teilweise auszuführen.

In Verbindung mit dem Verfahren zum Bestimmen der digitalen 3D-Repräsentation der Person mittels der 3D-Scanvorrichtung können die vorangehend im Zusammenhang mit der Scanvorrichtung beschriebenen Ausgestaltungen einzeln oder in beliebiger Kombination entsprechend vorgesehen sein.

Wenn ein zu scannendes Objekt im Aufnahmeraum aufgestellt werden soll oder wenn eine Person gescannt werden soll, beispielsweise zur Messung der Konfektionsgrößen oder zur Simulation einer Kleideranprobe, so kann die betreffende Person einfach zwischen den Stelen hindurchgehen und sich auf die Objektplattform begeben, ohne dass die Gefahr besteht, dass sie über Kabel stolpert. An einer einzelnen Stele können dabei auch mehrere Kameramodule angeordnet sein, beispielsweise in unter- schiedlichen Höhen.

In dem Steuerrechner kann ein Node-JS / Socket-IO-Server für die Kommunikation mit den Aufnahmeeinheiten implementiert sein.

Der Rechner kann einen Internetzugang aufweisen, so dass das Auswertungsrechnersystem durch einen oder mehrere Cloud-Rechner im Internet gebildet werden kann. Die zweidimensionalen Bilder werden dann beispielsweise mit Hilfe eines FTP-Servers an das Auswertungsrechnersystem übermittelt.

In dem Steuerrechner kann ein Webserver implementiert sein, der es erlaubt, den 3D Scanner von irgendeinem internetfähigen Endgerät aus, beispielsweise von einem Smartphone aus zu bedienen.

Für die Kameramodule können Komponenten kostengünstiger platinenmontierter Kameramodule verwendet werden, die im Handel beispielsweise als Zubehör für sogenannte Einplatinencomputer erhältlich sind. Allerdings wird vorzugsweise das in diesen Kameramodulen vorhandene einfache Kunststoffobjektiv durch ein hochwertigeres Objektiv ersetzt, das mit Hilfe eines Adapters in Bezug auf den Bildsensor positioniert wird, damit eine höhere Bildqualität erreicht wird.

Ein Anwendungsgebiet des 3D-Scannens mit dem hier beschriebenen Verfahren ist das Vermessen von 3D-erfassten Personen. Um eine Vermessung der Personen zu ermöglichen, muss die zu scannende Person sich in einer bestimmten Pose im Zentrum des Scanners befinden. Dies ist erforderlich, da nur auf diese Art Hinterschneidungen und Verdeckungen bzw. Verformungen des Körpers vermieden und somit ein valides Scanergebnis erzeugt werden kann.

Es kann ein Kameramodul mit einer Platine vorgesehen sein, die mit Komponenten einer digitalen Kameraelektronik bestückt ist. Auf der Platine kann ein optisches Sensorfeld angeordnet sein, das in einem Gehäuse aufgenommen ist, welches einen rechteckigen Sockel und einen von der Oberseite des Sockels vorspringenden zylindrischen Objektivhalter bildet. Es ist ein scheibenförmiger Adapter vorgesehen, der eine durchgehende Bohrung aufweist, in die der Objektivhalter passend eingreift, und der weiterhin auf einer Seite einen auf die Bohrung zentrierten Normgewindestutzen für ein auswechselbares Objektiv und auf der entgegengesetzten Seite eine rechtwinklig zur Achse der Bohrung verlaufende ebene erste Referenzfläche für die Oberseite des Sockels sowie eine Stufe mit einer rechtwinklig zu der ersten Referenzfläche verlaufenden zweiten Referenzfläche für eine Seitenfläche des Sockels aufweist.

Der Adapter erlaubt es, das mitgelieferte Kunststoffobjektiv durch ein höherwertiges Objektiv zu ersetzen, wie es auch bei handelsüblichen Digitalkameras benutzt wird. Hierzu wird das Kunststoffobjektiv aus dem Objektivhalter entfernt, und der Objektivhalter wird in die Bohrung des Adapters eingesteckt. Auf diese Weise wird eine genaue Zentrierung des in den Normgewindestutzen eingeschraubten Objektivs auf das Sensorfeld erreicht. Da die Oberseite des rechteckigen Sockels exakt parallel zur Ebene des optischen Sensorfeldes ausgerichtet ist, stellt die erste Referenzfläche des Adapters sicher, dass auch die Bildebene des neuen Objektivs exakt parallel zur Ebene des Sensorfeldes orientiert ist. Mit Hilfe der zweiten Referenzfläche wird die Zeilenrichtung des Sensorfeldes relativ zum Adapter festgelegt.

Der Adapter kann auf der Rückseite, die der Platine zugewandt ist, eine Nut aufweisen, deren Boden die erste Referenzfläche bildet und deren Seitenwände den Sockel des Gehäuses passend aufnehmen, so dass sie als zweite Referenzflächen dienen. In der Nut und ggf. weiteren Ausnehmungen, die sich auf der Rückseite des Adapters befinden, können die elektronischen Komponenten untergebracht werden, die zusätzlich zu dem Sensorfeld auf der Platine angeordnet sind.

Die durch das hochwertigere Objektiv erreichte Verbesserung der Bildqualität erlaubt es insbesondere, weitgehend verzerrungsfreie digitale 2D-Bilder zu erhalten, so dass sich aus Bildern eines zu scannenden Objektes, die mit mehreren gleichartigen Kameramodulen aus verschiedenen Richtungen aufgenommen werden, ein digitales dreidimensionales Modell des Objekts zu bestimmen.

### Beschreibung von Ausführungsbeispielen

Im Folgenden werden weitere Ausführungsbeispiele anhand von Figuren einer Zeichnung näher erläutert. Hierbei zeigen:
- Fig. 1: eine schematische Darstellung einer 3D-Scanvorrichtung;
- Fig. 2: eine perspektivische Explosionsdarstellung eines Kameramoduls;
- Fig. 3: eine schematische Darstellung einer Rückseite eines Adapters des Kameramoduls nach Fig. 2;
- Fig. 4: eine schematische Darstellung einer 3D-Scanvorrichtung mit Halbschalen-Wandelementen, die gerundet sind;
- Fig. 5: eine schematische Darstellung einer 3D-Scanvorrichtung mit Halbschalen-Wandelementen, die eckig ausgebildet sind;
- Fig. 6: eine schematische Darstellung der 3D-Scanvorrichtung aus Fig. 4, wobei ein Bildaufnahmebereich für zwei Kameramodule gezeigt ist;
- Fig. 7: eine schematische Darstellung eines Segments eines Wandelementes;
- Fig. 8: eine schematische Darstellung zu einem Verfahren zum Bestimmen einer digitalen 3D-Repräsentation einer Person; und
- Fig. 9: eine schematische Darstellung eines Miniaturprojektors

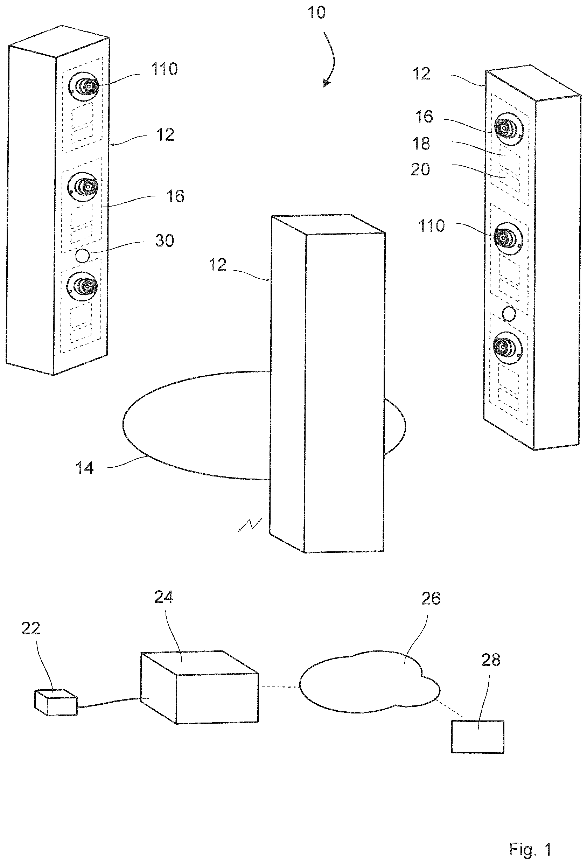

Der in Fig. 1 gezeigte 3D-Scanner 10 weist mehrere (im gezeigten Beispiel drei) Stelen 12 auf, die einzeln und unabhängig voneinander aufstellbar sind, und jeweils mehrere (im gezeigten Beispiel ebenfalls drei) Kameramodule 110 aufweisen. Die Stelen 12 sind so um eine Objektplattform 14 herum angeordnet, dass die Kameramodule 110 auf die Objektplattform gerichtet sind, so dass ein auf der Objektplattform 14 angeordnetes Objekt oder eine auf dieser Plattform stehende Person mit Hilfe der Kameramodule 110 aus mehreren Richtungen fotografiert werden kann.

Jedes Kameramodul ist Teil einer Aufnahmeeinheit 16, zu der außerdem ein Mikrocontroller 18 und eine Kommunikationsschnittstelle 20 für ein drahtloses Kommunikationsnetzwerk (zum Beispiel WiFi) gehören. Über dieses Netzwerk kommunizieren die Aufnahmeeinheiten 16 drahtlos mit einem Router 22, der an einen zentralen Steuerrechner 24 angeschlossen ist. Der zentrale Steuerrechner 24 dient als Master, der die einzelnen Aufnahmeeinheiten 16 als Clients steuert. Der Steuerrechner 24 ist über einen Internetzugang mit dem Internet 26 verbunden und enthält beispielsweise einen Node-JS / Socket-IO- Server für die Kommunikation mit den Aufnahmeeinheiten 16 sowie einen Webserver und einen FTP-Server für die Kommunikation über das Internet 26.

Der Webserver erlaubt es, den 3D-Scanner 10 (3D-Scanvorrichtung) von jedem internetfähigen Gerät aus zu steuern, beispielsweise von einem Smartphone aus.

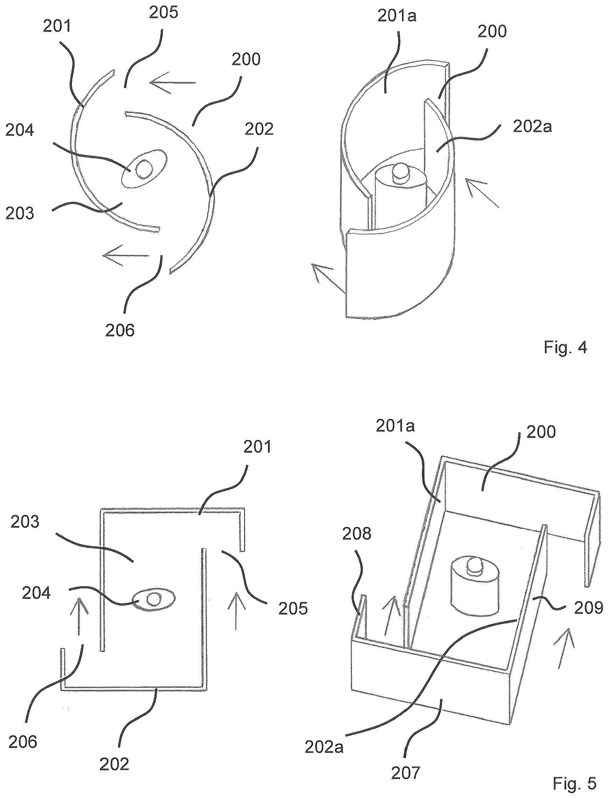

Damit aus den von den Aufnahmeeinheiten 16 aufgenommenen digitalen 2D-Bildern des Objekts ein digitales dreidimensionales Modell (3D-Modell) des Objekts bestimmt werden kann, ist es insbesondere bei beweglichen Objekten wie Personen wichtig, dass die Auslösezeitpunkte der Kameramodule 110 miteinander synchronisiert sind. Zur Vorbereitung eines Aufnahmevorgangs sendet der Steuerrechner 24 einen Befehl an alle Aufnahmeeinheiten 16, der diese in einen aufnahmebereiten Zustand versetzt. Nachdem alle Aufnahmeeinheiten die Aufnahmebereitschaft bestätigt haben, wird vom Steuerrechner 24 ein Auslösesignal gesendet, durch das sämtliche Kameramodule 110 zeitgleich aus- gelöst werden. Die aufgenommenen 2D-Bilder werden drahtlos an den Steuerrechner 24 übermittelt und über das Internet 26 an ein Auswertungsrechnersystem 28 (Cloud) weitergeleitet, das aus den 2D-Bildern der verschiedenen Aufnahmeeinheiten 16 ein 3D-Modell errechnet. Hierbei werden die bekannten Brennweiten der Kameraobjektive sowie die Abmessungen und Auflösungen der (CCD-) Sensorfelder der Kameramodule 110 berücksichtigt. Die Information über die genauen Positionen der Kameramodule 110 ist implizit in den zweidimensionalen Bildern enthalten und lässt sich aus Unterschieden zwischen den einzelnen Bildern, die sich aus den unterschiedlichen Betrachtungsrichtungen ergeben, bestimmen. Die Stelen 12 können frei kombiniert werden, insbesondere zum Ausbilden der unten unter Bezugnahme auf die Fig. 4 und 5 beschriebenen Konfiguration entsprechend.

Es versteht sich, dass jede Stele über eine Spannungsversorgung in der Form einer Batterie oder eines Netzanschlusses verfügt. Wahlweise kann jede Stele darüber hinaus mindestens ein Projektionssystem 30 enthalten, das es erlaubt, Muster auf das zu scannende Objekt zu projizieren.

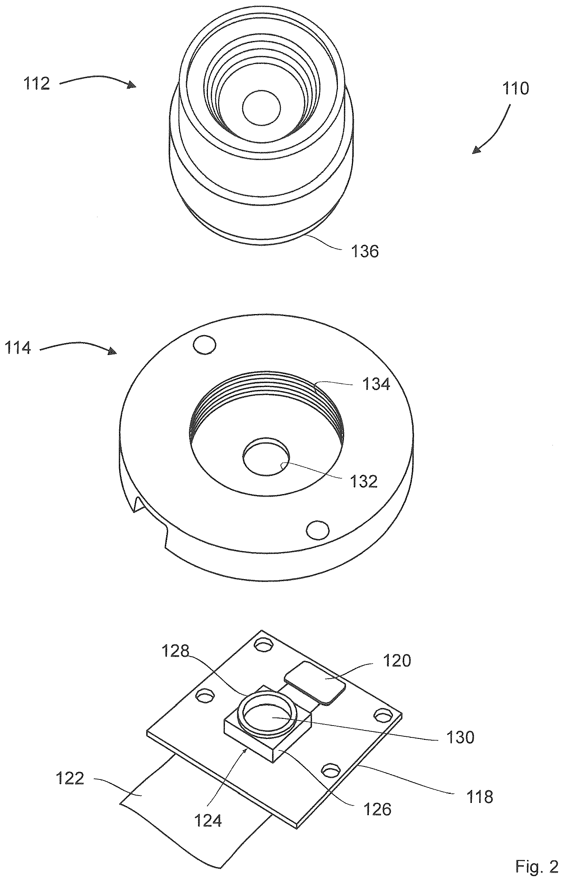

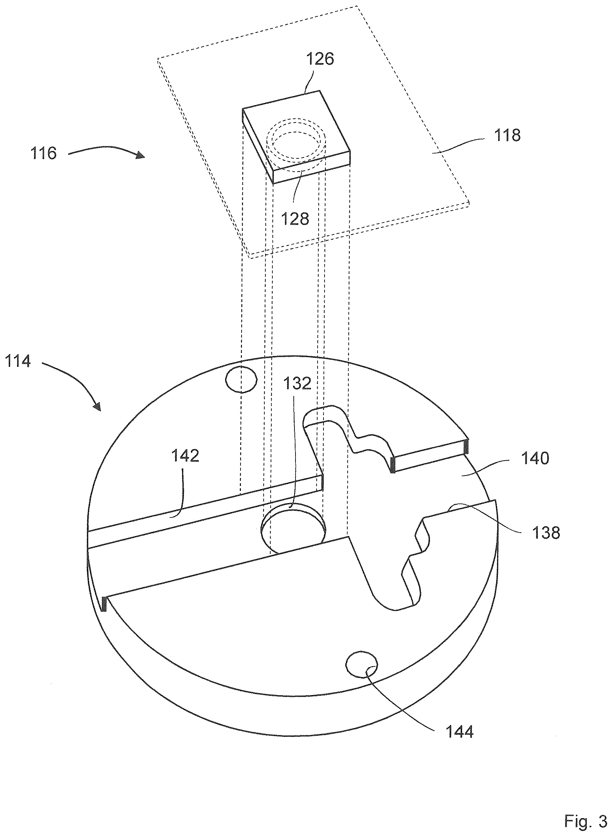

In Fig. 2 und 3 ist ein einzelnes Kameramodul 110 gezeigt. Das Kameramodul 110 weist ein handelsübliches Objektiv 112 für eine Digitalkamera, einen scheibenförmigen Adapter 114, der zum Beispiel aus Kunststoff ist, und ein Grundelement 116 auf, das die eigentliche Digitalkamera bildet.

Das Grundelement 116 weist eine Platine 118 auf, die mit Komponenten 120 einer digitalen Kameraelektronik bestückt ist und von der ein Leitungsträger 122 zu dem hier nicht gezeigten Mikrocontroller führt, der das Kameramodul 110 steuert und die aufgenommenen digitalen Bilder aufzeichnet. Der Leitungsträger 122 weist nicht gezeigte Leiterbahnen auf, die mit entsprechenden Kontakten auf der Platine 118 verbunden sind.

Auf der Platine 118 ist ein Gehäuse 124 montiert, das einen rechteckigen (quaderförmigen) Sockel 126 bildet, von dessen Oberseite ein zylindrischer Objektivhalter 128 vorspringt. Der Boden des Gehäuses 124 wird durch optisches Sensorfeld 130 gebildet, beispielsweise eine matrixförmige Anordnung von CCD-Elementen, die beispielsweise durch Oberflächenmontage (SMD) auf der Platine befestigt und kontaktiert ist und dazu dient, ein von dem Objektiv 112 auf das Sensorfeld projiziertes Bild pixelweise in elektronische Signale umzuwandeln, die dann von der Kameraelektronik weiter verarbeitet werden.

Das Grundelement 116 wird aus einem im Handel erhältlichen Kameramodul gewonnen, bei dem in den Objektivhalter 128 ein Kunststoffobjektiv eingesetzt ist. Zum Aufbau des Kameramoduls 110 wird dieses Kunststoffobjektiv entfernt, und stattdessen wird mit Hilfe des Adapters 114 das Objektiv 112 präzise in Bezug auf das Sensorfeld 130 positioniert.

Zu diesem Zweck weist der Adapter 114 eine durchgehende zentrale Bohrung 132 auf, in die der Objektivhalter 128 von der Rückseite her passend eingesteckt wird. Auf der Oberseite bildet der Adapter 114 einen Normgewindestutzen 134 mit einem Innengewinde, in das ein Außengewinde 136 des Objektivs 112 einschraubbar ist. Beispielsweise beträgt der Gewindedurchmesser des Normgewindestutzens 134 ein Zoll und ist so deutlich größer als der Durchmesser der Bohrung 132 und des Objektivhalters 128.

Wie deutlicher in Fig. 3 zu erkennen ist, weist der Adapter 114 auf der Rückseite eine Nut 138 auf, in die der Sockel 126 des Grundelements 116 passend eingreift. Der Boden der Nut 138, in dem sich die Bohrung 132 befindet, bildet eine erste Referenzfläche 140, an der die (in Fig. 3 nach unten weisende) Oberseite des Sockels 126 satt anliegt. Auf diese Weise wird das Gehäuse 124 so positioniert, dass die Ebene des Sensorfeldes 130 exakt parallel zur Bildebene des in den Normgewindestutzen 134 eingeschraubten Objektivs 112 ausgerichtet ist.

Die Seitenwände der Nut 138 bilden eine zweite Referenzfläche 142 (im gezeigten Beispiel sogar zwei einander gegenüberliegende Referenzflächen) für die entsprechende Seitenfläche des Sockels 126. Durch Anlage der Seitenflächen des Sockels 126 an den zweiten Referenzflächen 142 wird die Winkelorientierung des Sensorfeldes 130 in Bezug auf den Adapter 114 festgelegt.

Im gezeigten Beispiel weist der Adapter 114 Befestigungsbohrungen 144 auf, die es erlauben, den Adapter 114 und damit das gesamte Kameramodul 110 in einer definierten Position an der Stele 12 zu befestigen.

Fig. 4 zeigt eine schematische Darstellung einer 3D-Scanvorrichtung 200 für ein zu bestimmendes Objekt, insbesondere eine Person. Eine weitere Ausgestaltung einer 3D-Scanvorrichtung 200 ist schematisch in Fig. 5 gezeigt. Die 3D-Scanvorrichtung 200 weist zueinander versetzt angeordnete Wandelemente 201, 202 auf, die jeweils als Halbschale ausgebildet und versetzt zueinander angeordnet sind. Die Wandelemente 201, 202 können als mobile Stellwandelemente gebildet sein. Es kann vorgesehen sein, die Wandelemente 201, 202 jeweils aus mehreren lösbar verbundenen Teilwandelementen zusammenzusetzen.

Zwischen den Wandelementen 201, 202 ist ein Aufnahmeraum 203 gebildet, zu dem eine Person 204, für die zweidimensionale Bilder erfasst werden sollen, über einen Eingang 205 gelangt. Den Aufnahmeraum 203 verlässt die Person 204 nach dem Scannen über einen Ausgang 206. Der Eingang 205 und / oder der Ausgang 206, die getrennt voneinander angeordnet sind, können sichtblind ausgeführt sein, so dass von außen durch den Eingang 205 und / oder den Ausgang 206 der Aufnahmeraum 203 nicht einsehbar ist. Der Eingang 205 und der Ausgang 206 sind in gegenüberliegenden Bereichen der Wandelemente 201, 202 wie auch des Aufnahmeraums 203 angeordnet.

Vor dem Eingang 205 und / oder dem Ausgang 206 kann ein Umkleidebereich vorgesehen sein, zum Beispiel eine jeweilige Umkleidekabine, beispielsweise eine zum Aufnahmeraum 204 hin offene oder verschließbare Kabine. Es kann vorgesehen sein, dass ein Zugang zum Eingang 205 / Ausgang 206 nur durch die Umkleidekabine ermöglicht ist.

Der Aufnahmeraum 203 weist bei einer der Ausgestaltungen eine einer Ellipse ähnliche Grundfläche auf. Alternativ kann eine rechteckige Grundflächenform vorgesehen sein.

Die Wandelemente 201, 202, welche wenigstens Personenhöhe aufweisen, zum Beispiel eine Höhe zwischen etwa 2m und etwa 2,30m, sind miteinander verschachtelt, was derart geschehen kann, dass der Aufnahmeraum 203 von außen nicht einsehbar ist. Die Wandelemente 201, 202 können untereinander keine Verbindung aufweisen. Bei der Ausführungsform in Fig. 4 sind die Wandelemente 201, 202 halbkreisförmig gebildet. Demgegenüber sind die Wandelemente 201, 202 in Fig. 5 mit einer eckigen Grundform ausgestattet. Von einem Basiselement 207, erstrecken sich im rechten Winkel seitliche Elemente 208, 209, die unterschiedliche Längen aufweisen. Gemäß Fig. 5 sind die längeren Wandelemente einander gegenüberliegend angeordnet und begrenzen den Ausnahmeraum 203.

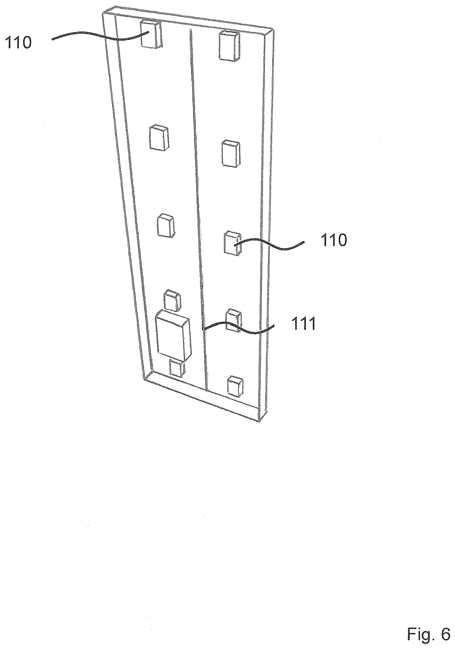

Auf einer jeweiligen Innenseite 201a, 202a der Wandelemente 201, 202 sind die Kameramodule 110 verteilt angeordnet. Fig. 6 zeigt eine schematische Darstellung der 3D-Scanvorrichtung 200 in der Ausführung nach Fig. 4, wobei ein Bildaufnahmebereich für zwei Kameramodule C1 und C2 gezeigt ist.

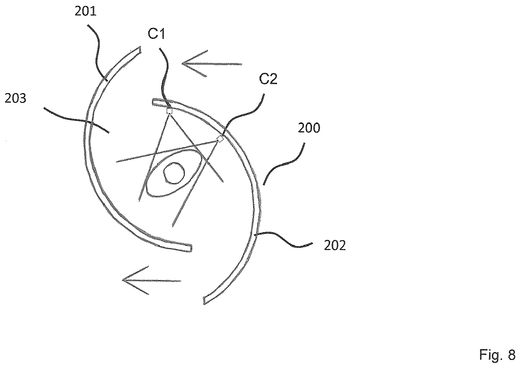

Fig. 8 zeigt eine schematische Darstellung eines Segments der Wandelemente 201, 202 mit hierauf innenseitig angeordneten Kameramodulen 110. Die Kameramodule 110 können in eine Aufnahmeeinheit 16 integriert sein, wie dies oben unter Bezugnahme auf die Fig. 1 bis 3 erläutert wurde. Segmente mit den hierauf angeordneten Kameramodulen 110 können in gleichen oder sich unterscheidenden Abständen entlang der Wandelemente 201, 202 innenseitig angeordnet sein, insbesondere im Bereich der dem Aufnahmeraum 203 zugewandten Abschnitten der Wandelemente 201, 202. Die Kameramodule 110 sind jeweils in einer gekapselten Box verbaut, welche mittels Vorsehen von Steckverschlüssen einfach ausgetauscht werden kann. Es ist ein LED-Streifen 111 vorgesehen, der dem Beleuchten des Aufnahmeraums 203 dient. Zumindest ein Teil der Kameramodule 110 kann einen Miniaturprojektor aufweisen.

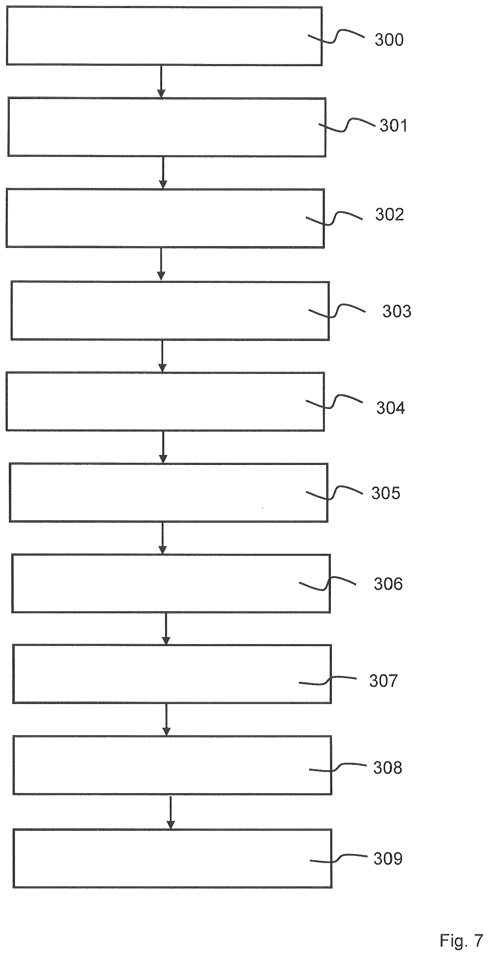

Fig. 7 zeigt eine schematische Darstellung in Verbindung mit einem Verfahren zum Bestimmen oder Erzeugen einer digitalen 3D-Repräsentation der Person 204 mit Hilfe der 3D-Scanvorrichtung 200. Im Schritt 300 betritt die Person 204 den Aufnahmeraum 203 durch den Eingang 205.

Auf ein oder mehrere Triggersignale hin werden die Kameramodule 110 nacheinander oder alle gemeinsam ausgelöst im Schritt 301, um zweidimensionale Bilder (2D-Bilder) von der Person 204 aufzunehmen. Auf diese Weise erfolgt mittels Triggersignalen eine Synchronisation der einen oder der mehreren Bildaufnahmen. Das Triggersignal kann zum Beispiel ein elektrischer Kontakt sein, der mittels eines Mikrocontrollers ausgelesen wird, zum Beispiel mittels des Steuerrechners 24. Alternativ kann das Triggersignal mittels einer Bediensoftware der 3D-Scanvorrichtung 200 digital erzeugt werden. Dieses Signal kann wahlweise durch einen Operator oder durch die zu scannende Person 204 erzeugt werden. Der Operator hat die Möglichkeit, sich mit einem Tablet in die Bedienoberfläche der 3D-Scanvorrichtung 200 über einen Browser einzuwählen und den Scanprozess über das Bedienen eines Tastenfeldes zu starten. Die zu scannende Person 204 kann innerhalb der 3D-Scanvorrichtung 200 den Scanprozess mittels Bedienen eines Bodenkontakts (nicht dargestellt) mit dem Fuß auslösen (triggern). Im Anschluss erfolgt auf einem in Sichthöhe der Person 204 in der 3D-Scanvorrichtung 200 montierten Vorschaumonitor ein Countdown, nach dessen Beendigung der Scanprozess abgeschlossen ist, und es erscheint eine Vorschau zur Bewertung des Ergebnisses, insbesondere der aufgenommenen 2D-Bilder. Ist die zu scannende Person 204 mit der Darstellung auf dem Vorschaumonitor zufrieden, kann sie den Aufnahmeraum 203 durch den Ausgang 206 verlassen.

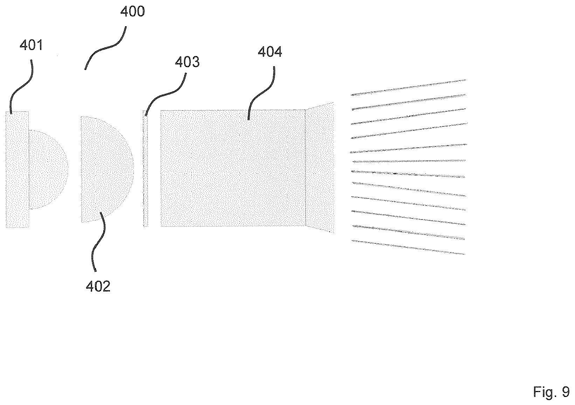

Im Schritt 302 werden 2D-Bilder der Person 204 mittels der Kameramodule 110 erfasst. Es werden Bildaufnahmen mit und ohne ein oder mehrere auf die Person 204 projizierte Projektionsmuster gemacht. Ein Projektionsmuster ist ein mittels eines oder mehrerer Miniaturprojektoren, welche jeweils in eines der Kameramodule 110 integriert sein können, auf die Oberfläche der Person 204 aufgebrachtes Muster, zum Beispiel ein Gaußsches Rauschmuster oder ein anderes Punktmuster. Das Projektionsmuster unterstützt den Prozess der späteren Merkmalsbestimmung in den 2D-Bildaufnahmen der Person 204. Der oder die Miniaturprojektoren (vgl. Fig. 9) weisen zum Beispiel eine Lichtquelle 400, ein Sammellinse zur Bündelung des Lichts 401 von der Lichtquelle 400, ein Projektionsmedium 402 und ein Objektiv 403 zur Fokussierung des Musters auf das Objekt 404 auf. Naturgemäß verfügt menschliche Haut über wenig Kontraste. Für eine möglichst hochwertige und genaue 3D-Rekonstruktion auf photogrammetrischer Basis kann vorgesehen sein, kontraststarke Abbildungen oder Muster auf die Person 204 zu projizieren. Das Projektionsmuster kann ein zufällig gestreutes Punktmuster sein, welches mittels Filmbelichtung erzeugt wird.

Der Scanprozess besteht aus Aufnahmeschritten, in denen mittels der Kameramodule 110 Bilder für die Person 204 aufgenommen werden. In einer Ausführung werden in einem Schritt die Miniaturprojektoren angeschaltet, und es entstehen kontraststarke, mit den Projektionsmustern versehene Bilder der Person 204 (Bilddatensatz A). In einem weiteren Aufnahmeschritt werden die Projektoren deaktiviert und Bilder der Person 204 ohne das Projektionsmuster erfasst. Hierbei werden im Unterschied zum vorangehenden Aufnahmeschritt kontrastärmere, aber farbtreue und unverfälschte Bilder der Person 204 aufgenommen (Bilddatensatz B).

Im Fall einer beispielhaften Nutzung von 70 Kameramodulen 110 entstehen auf diese Art 140 Aufnahmen (zweimal 70 synchrone Aufnahmen mit und ohne Projektionsmuster). Die Reihenfolge der Aufnahmeschritte spielt keine Rolle. Die Dauer für eine Aufnahme beträgt bevorzugt weniger als eine ¼ Sekunde. Der gesamte Aufnahmeprozess dauert somit weniger als 0,5 Sekunden. Ist das Objekt (Person 204) von Natur aus hinreichend kontrastreich, kann in einer nicht beanspruchten Verfahrensgestaltung auf den Projektionsschritt und somit Bilddatensatz A verzichtet werden. Es genügt dann Bilddatensatz B für die weiteren Prozessschritte, also insbesondere das Bilden der Hülle und das Generieren der Fototextur (vgl. unten), zu verwenden. In einer Ausführungsform werden in den Kameramodulen 110 für die gemachten Bildaufnahmen Bildmerkmale bestimmt im Schritt 303, zum Beispiel mittels des Mikrocontrollers 18 der Aufnahmeeinheit 16. Alternativ oder ergänzend kann die Merkmalsbestimmung ganz oder teilweise nach einer Übertragung der digitalen Bilder auf den zentralen Steuerrechner 24, der über eine drahtlose und / oder drahtgebundene Datenverbindung mit den Kameramodulen 110 verbunden ist, vorgenommen werden. Bei der Merkmalsbestimmung werden im Rahmen einer digitalen Bildanalyse die 2D-Bildaufnahmen der Person 204 mit und ohne das hierauf projizierte Muster analysiert. Ein Bildmerkmal ist ein bei der digitalen Bildanalyse unterscheidbares Merkmal in den aufgenommenen Bildern der Person 204. Dies können zum Beispiel Kanten, Konturen oder Kontrastsprünge im digitalen Bild sein. Bei dem photogrammetrischen Verfahren können SIFT-Merkmale (von engl. Scale Invariant Feature Transformation) bestimmt werden.

Beide Bilddatensätze A und B werden getrennt voneinander behandelt. Bilddatensatz A wird für den photogrammetrischen Prozess verwendet, dessen Ziel es ist, ein 3D-Modell und die räumliche Positionen der Kameramodule 110 in Bezug auf den Aufnahmeraum 203 zu bestimmen. Anstatt die Position und die Ausrichtung der Kameramodule 110 über das Handaufmaß zu erfassen, ist zum Beispiel vorgesehen, einen hinsichtlich seiner Formgestaltung bekannten Prüfkörper in den Aufnahmeraum 203 zu stellen und zu scannen. Der Prüfkörper kann zum Beispiel säulenförmig und etwa 2 m groß sein, er kann einen Durchmesser von etwa 0,5 m aufweisen. Er kann über eine mit einem Gaußschen Punktmuster bedruckte Oberfläche verfügen. Aus ihm lassen sich mittels photogrammetrischer Verfahren, die als solche in verschiedenen Ausführungen bekannt sind, die räumlichen Positionen der Kameramodule 110 in Bezug auf den Aufnahmeraum 203 und die Ausrichtungen der Kameramodule 203, und die Aufnahmerichtung für die Bildaufnahme, bestimmen. Auf diese Weise lassen sich qualitative Vergleiche zwischen 3D-Scanvorrichtungen an verschiedenen Standorten ausführen. Als Beispiel: Standort 1 scannt einen Prüfkörper mit einer Präzision von 0,85. Standort 2, der identisch erscheint, erzeugt bei einem identischen Prüfkörper nur eine Genauigkeit von 0,78. Die Geometrien des idealen Körpers sind klar, es kann zum Beispiel ein geschlossener Zylinder mit definierten Maßen sein. Führt man einen Scan an Standort 1 aus und subtrahiert den gescannten Zylinder von dem idealen Zylinder, ergibt sich dabei ein ortsabhängiger Restwert, bzw. Über- oder Untermaß. Dies kann als Maß für die lokale Genauigkeit der 3D-Rekonstruktion des Prüfkörpers angegeben werden. Werden diese Tests an verschiedenen Standorten durchgeführt, können die Ergebnisse miteinander verglichen werden und so Aussagen über die Qualität der jeweiligen Standorte getroffen werden. Qualitative Unterschiede können zum Beispiel durch eine Veränderung der Beleuchtung oder schlecht fokussierte Kameramodule 110 entstehen.

Der Prüfkörper ermöglicht an dieser Stelle, die Qualität vergleichbar zu machen, und bietet Möglichkeiten, Fehlerquellen zu identifizieren.

Sind die räumlichen Positionen der Kameramodule 110 ermittelt, wird Bilddatensatz B dazu verwendet, virtuell eine Fototextur, d.h. die farblichen Eigenschaften der Oberfläche, auf das 3D-Modell, welches später unter Zuhilfenahme von Bilddatensatz A berechnet wird, zu projizieren. Dies ist möglich, da beide Bilddatensätze A und B identische Kamerapositionen haben und den Gesetzen der optischen Abbildung folgend umkehrbar sind, so dass aus einem Aufnahmesystem auch ein Projektionssystem werden kann. Die Bilder aus Bilddatensatz A, welche technisch gesehen für die Texturprojektion ebenfalls in Frage kämen, verfügen über die Punkte aus dem Projektionsmuster und können daher für diese Anwendung nicht verwendet werden. Die natürliche Erscheinung wäre durch die Projektionsmuster verfälscht. Der Bilddatensatz B, der lediglich für die Fototexturen verwendet wird, kann direkt im Anschluss an (oder vor) Bilddatensatz A erfasst werden. Die eigentliche Verwendung, also aus ihm heraus die Fototextur zu generieren, findet jedoch erst später (vgl. Schritt 308 unten) statt. Eine nicht beanspruchte Ausgestaltung kann sein, dass die Haut der zu scannenden Person 204 so viele Kontraste / Merkmale aufweist, dass eine Musterprojektion entfallen kann. In diesem Fall kann Bilddatensatz A, entfallen und Bilddatensatz B dient einerseits für die 3D-Rekonstruktion und andererseits zur Generierung der Fototextur.

Im Schritt 304 werden die Bilddaten von den Kameramodulen 110 auf den lokalen Server übertragen, zum Beispiel den zentralen Steuerrechner 24. Alternativ können die SIFT-Merkmale auf den Kameramodulen 110 bestimmt werden, welche zu diesem Zweck mit einer Mikroprozessoreinrichtung ausgestattet sein könne, die einen Prozessor und einen zugeordneten Speicher aufweist.

Im Schritt 305 wird auf dem lokalen Server geprüft, welches Bildmerkmal auf welcher 2D-Bildaufnahme zu sehen ist (Sichtbarkeit).

Nachdem die Bildmerkmale und die Sichtbarkeiten der Bildmerkmale bestimmt wurden, können im Schritt 306 anhand der zuvor bestimmten Positionen der Kameramodule 110 3D-Koordinaten für die Bildmerkmale bestimmt werden. Es wird eine sogenannte Sparse Point Cloud bestimmt, also eine Punktwolke der Bildmerkmale. Das Verfahren der Photogrammetrie ist als solches in verschiedenen Varianten bekannt. Beispielhaft wird auf die folgenden Dokumente verwiesen: DE 101 56 908 A1, DE 10 2005 051 020 B4, DE 103 09 788 A1. Ziel der Photogrammetrie zur Objekterfassung ist es, auf Grundlage von Bildaufnahmen über verschiedene Berechnungswege ein digitales 3D-Gitternetzmodell (3D-Repräsentation) eines Körpers zu bestimmen, hier insbesondere der Person 204. Im Wesentlichen sind zunächst das Auffinden der Bildmerkmale, eine Kamerapositionsbestimmung und schließlich eine Bestimmung von Tiefenkarten vorgesehen. Für die Berechnung von 3D-Koordinaten eines Bildmerkmals ist es notwendig, dass diese Merkmale von mehreren Kameramodulen 110 erfasst werden können. Sollte nun ein Bildmerkmal nur von einem Kameramodul 110 gesehen werden, ist dieses Merkmal für seine 3D-Positionsbestimmung nicht verwendbar. Sind die 3D-Koordinaten der Bildmerkmale berechnet und liegen alle Positionen für die Kameramodule 110 vor, ist die sogenannte Sparse Point Cloud, also die dünne Punktwolke der aufgefundenen Bildmerkmale, bestimmbar, in der alle Bildmerkmale in einem 3D-Raum zusammengefügt werden.

Bei dem üblichen Photogrammetrie-Verfahren werden im Anschluss Tiefenkarten berechnet, auf deren Grundlage dann das Gitternetzmodell des Körpers generiert wird. In dem hier beschriebenen Verfahren entfällt dieser Schritt. Die generierte dünne Punktwolke wird zur Anpassung eines Phänotyps verwendet, was nachfolgend erläutert wird.

Im Schritt 307 wird die Sparse Point Cloud verwendet, um eine Anpassung eines vorhandenen Phänotyps vorzunehmen.

Ziel des hier beschriebenen Verfahrens ist es zum Beispiel, menschliche Körper digital zu erfassen, in eine digitale 3D-Gitternetz-Darstellung mit hierauf angeordneter Textur (3D-Rekonstruktion oder -Repräsentation) zu wandeln und dann zu vermessen. Die im Folgenden beschriebenen Schritte sind einzeln oder in beliebiger Kombination unabhängig von der Art, wie zuvor die dünne Punktwolke bestimmt wurde. Für Letzteres wurde oben lediglich ein Beispiel beschreiben.

Da sich menschliche Körper grundsätzlich ähneln, ist vorgesehen, einen vordefinierten Körper (Phänotyp) bereitzustellen, der über perfekte Eigenschaften hinsichtlich der Gitternetzstruktur verfügt. Die beschriebene photogrammetrische Methodik liefert eine sogenannte dünne Punktwolke, auf deren Grundlage das Bilden eines Gitternetzes nur zu einem ungenauen Ergebnis führen würde. Phänotypen können zum Beispiel mit einer Software zur generischen Bildung von 3D-Avataren erstellt werden (vgl. zum Beispiel http://www.makehuman.org).

Die Phänotypen werden von digitalen Musterdatensätzen repräsentiert, die jeweils eine 3D-Gitternetzstrukutr für einen Beispiel- oder Standardphänotyp aufweisen. Die Phänotypen verfügen über eine perfekte Gitternetztopologie, Texturkoordinaten und ein virtuelles Skelett (Rig). Es werden angepasste Phänotypen verwendet. Die oben genannte Software-Applikation "makehuman.org" verfügt über abstrakte Anpassungsregler. Zum Beispiel wurde statistisch ermittelt, wie sich ein Körper verändert, wenn er nicht 7, sondern 70 Jahre alt ist. Es ist festzulegen, wie ein etwa 50 Jahre alter Mann aussieht.

Mittels Erfassen sehr grober, anthropologischer Merkmale (Alter, Geschlecht), die vor dem 3D-Scanprozess für die Person 204 abgefragt werden, zum Beispiel von einem Bediener (Operator) der 3D-Scanvorrichtung 200, wird ein entsprechender Phänotyp generiert, zum Beispiel im zentralen Steuerrechner 24. Die Generierung des 3D-Gitternetzes des Phänotyps verfeinert sich weiter durch eine Analyse der Sparse Point Cloud, die aus den Bildaufnahmen bestimmt wurde. Zum Beispiel werden Merkmale wie Bauchumfang, Körperhöhe und / oder Armlänge aus der dünnen Punktwolke bestimmt und genutzt, um das Gitternetz des Phänotyps anzupassen. Zum Beispiel kann so die aus der dünnen Punktwolke für die zu scannende Person 204 bestimmt Armlänge auf die 3D-Gitternetzstruktur übertragen werdn.

Sind gewünschte Merkmale bekannt, insbesondere grobe Merkmale, kann der Phänotyp zum Beispiel über "makehuman.org" instanziiert werden. Die Sparse Point Cloud wird verwendet, das das digitale Gitternetz des Phänotyps so zu verformen, dass er der gescannten Person 204 so stark ähnelt, bis ein Abbruchkriterium den Anpassungsprozess beendet, der beispielsweise im zentralen Steuerrechner 24 ausgeführt wird. Als Abbruchkriterium können entweder Iterationsschritte der Anpassungsalgorithmik oder ein bestimmtes Maß, zum Beispiel eine vorgegebene Toleranz oder eine vorgegebene Abweichung, verwendet werden.

Für den Abgleich zwischen dünner Punktwolke, die aus den digitalen 2D-Bildern bestimmt wurde, und dem digitalen 3D-Gitternetz des ausgewählten Phänotyps werden die dünne Punktwolke und die 3D-Gitternetzstruktur für den Phänotyp zunächst grob übereinander gelegt. Nun werden auf der Gitternetzoberfläche des Phänotyps Punkte extrahiert, die den Punkten auf der dünnen Punktwolke nahe sind. Hierbei wird die Anzahl der extrahierten Punkte zur Anzahl der Punkte der dünnen Punktwolke gleich gewählt. Die extrahierten Punkte der Gitternetzstruktur dienen im folgenden Prozess als Knotenpunkte für einen Verformungsprozess des 3D-Gittnernetzes des angepassten Phänotyps. Im ersten iterativen Prozessschritt wird der Abstand zwischen den Punkten der dünnen Punktwolke und den gebildeten Knotenpunkten auf dem Gitternetz des angepassten Phänotyps minimiert, indem die Knotenpunkte und somit das Gitternetz des angepassten Phänotyps selbst, entsprechend verschoben werden. In einem zweiten Iterationsschritt werden Winkel zwischen Flächenelementen auf dem Gitternetz des angepassten Phänotyps homogenisiert, so dass eine ebenmäßige Oberfläche erhalten bleibt. Diese beiden Schritte werden wiederholt, bis ein Großteil (zum Beispiel 75%) der Oberflächenelemente auf Höhe der Punkte der dünnen Punktwolke liegen. Die Anpassung ist nun abgeschlossen.

Die Daten werden auf einen entfernten Datenserver hochgeladen und in einem speziell gesicherten Nutzerkonto gespeichert, so dass ausschließlich die gescannte Person 204 jederzeit über eine Web-Anwendung darauf Zugriff erhalten kann. Jeder auf diese Weise angepasste Phänotyp erweitert die Datenbank von bestehenden Phänotypen und kann somit wieder bei der Anpassung einer späteren 3D-Rekonstruktion verwendet werden. Folglich entsteht ein wachsendes System, und die Anpassung der Phänotypen an neue dünne Punktwolken (Sparse Point Cloud), die aus Bildaufnahmen bestimmt wird, kann einfacher und schneller gestaltet werden, da eine steigende Anzahl an Phänotypen auch eine verbesserte Vorauswahl ermöglicht und somit weniger Anpassungsschritte nötig sind.

Eine Textur wird auf einen angepassten Phänotyp digital projiziert im Schritt 308. Eine Fototextur eines 3D-Scans ist ein Bild, welches bei dem Prozess des Textur-Mappings auf den gescannten 3D-Körper aufgebracht wird (vgl. zum Beispiel http://web.cse.ohio-state.edu/∼whmin/courses/cse5542-2013-spring/15-texture.pdf). Dieses Bild wird auf Grundlage des Bilddatensatzes B bestimmt, auf dem die kontrasterhöhenden Punktmuster (Projektionsmuster) nicht zu sehen sind, so dass ein realistischer Eindruck der Haut und der Körperpartien der zu scannenden Person 204 entsteht.

Im Schritt 309 werden elektronische Daten an einen entfernten Hauptserver, zum Beispiel das Auswerterechnersystem 28, übertragen, die den angepassten Phänotyp sowie die Textur anzeigen. Für den lokalen Aufbau ist eine 3D-EDV-Station erforderlich, zum Beispiel der zentrale Steuerrechner 24. Diese Station ist ein Computer, auf dem die Photogrammetrie-Software installiert ist, die eine automatische Verarbeitung der Daten ermöglicht. Die lokal verarbeiteten 3D-Daten, also insbesondere das Gitternetz des angepassten Phänotyps und die Fototextur, werden anschließend auf einen entfernten Server hochgeladen und dort in einer Datenbank gespeichert, beispielsweise das Auswerterechnersystem 28. Die lokalen Bilddaten werden nach einer bestimmten Frist gelöscht, da sie nicht weiter benötigt werden.

In einer alternativen Ausgestaltung kann das Verfahren zum Bestimmen einer 3D-Repräsentation der Person 204 oder eines anderen dreidimensionalen Objekts unter Bezugnahme auf die Schritt 300ff. wie nachfolgend erläutert ablaufen, wahlweise in Kombinationen mit einem oder mehreren Schritten in der vorangehenden beschriebenen Ausführung.

In einem Vorbereitungsschritt für das Scannen der Person 204 kann die 3D-Scanvorrichtung 200 mittels eines Prüfkörpers linearisiert werden, insbesondere werden die Positionen für die Kameramodule 110 mittels digitaler Auswertung von Bildaufnahmen des Prüfkörpers im Aufnahmeraum 203 bestimmt. Außerdem kann die Qualität der 3D-Scanvorrichtung 200 mit Hilfe des Prüfkörpers ermittelt werden (Skala [0; 1] Qualität 0: Keine Rekonstruktion erfolgt. 1: Perfekt rekonstruiert). Dieser Schritt erfolgt stets, nachdem an der 3D-Scanvorrichtung 200 etwas geändert wird, oder in regelmäßigen Intervallen.

Bei dem 3D-Scanvorgang zum Bestimmen einer digitalen 3D-Repräsentation eines dreidimensionalen Körpers, insbesondere der Person 204, kann alternativ folgender Ablauf vorgesehen sein:
- 300:: Person 204 betritt den Aufnahmeraum 203
- 301:: Person 204 / Operator löst das Trigger-Signal für die Bildaufnahmen aus
- 302:: Der Aufnahmeprozess läuft ab (ca. 1/2 s Gesamtlaufzeit, jeweils ca. 1/4 Sekunde pro Aufnahme für Bilddatensatz A (mit Projektionen) und B (ohne Projektionen)).
- 303:: Die Person 204 hat die Möglichkeit, die erfassten Bildaufnahmen an dem Vorschaumonitor im Aufnahmeraum 203 zu überprüfen. Entweder geht es danach zu Schritt 301 zurück oder alternativ zu Schritt 304.
- 304:: Die Bilddaten werden von den Kameramodulen 110 auf den lokalen Server übertragen. (Optional: Die SIFT-Merkmale werden auf den Kameramodulen 110 bestimmt, alternativ geschieht dies auf dem lokalen Server).
- 305:: Auf dem lokalen Server wird geprüft, welches Bildmerkmal auf welcher digitalen Bildaufnahme zu sehen ist (Sichtbarkeit).
- 306:: Der Rest der 3D-Rekonstruktion läuft auf dem lokalen Server ab. Das Ergebnis ist eine Sparse Point Cloud.
- 307:: Die Sparse Point Cloud wird verwendet, um den Phänotyp mittels Non-Rigid Registration anzupassen. Die Auswahl des am besten passenden Phänotyps für die Anpassung erfolgt über eine Vermessung grober Körpermaße.
- 308:: Die Bilder aus Bilddatensatz B werden dazu verwendet, eine Fototextur auf den Körper digital zu projizieren.
- 309:: Der Scandatensatz, bestehend aus dem Gitternetzmodell und der Fototextur sowie einer ID (Identifikation), die den Datensatz einem Benutzer zuordnet, wird auf einen entfernten Server übertragen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Bestimmen einer digitalen 3D-Repräsentation einer Person mittels 3D-Scanvorrichtung, wobei das Verfahren die folgenden Schritte aufweist:
- Bereitstellen einer 3D-Scanvorrichtung (200), bei der ein Aufnahmeraum (203) von Wandelementen (201, 202) umgeben ist;
- Aufnehmen von digitalen 2D-Bildern einer zu scannenden Person (204) in dem Aufnahmeraum (203) aus unterschiedlichen Aufnahmerichtungen mit Hilfe von Kameramodulen (110), die über die Wandelemente (201, 202) verteilt angeordnet sind;
- Projizieren eines Projektionsmusters auf die zu scannende Person (204) in dem Aufnahmeraum (203) mit Hilfe eines oder mehrerer Projektoren, die an den Wandelementen (201, 202) angeordnet sind;
- Aufnehmen von weiteren digitalen 2D-Bildern der zu scannenden Person (204) mit dem hierauf projizierten Projektionsmuster in dem Aufnahmeraum (203) aus den unterschiedlichen Aufnahmerichtungen mit Hilfe von Kameramodulen (110); und
- Bestimmen einer digitalen 3D-Repräsentation der zu scannenden Person (204) mit Hilfe einer Auswerteinrichtung (24; 28), die mit den Kameramodulen (110) verbunden und eingerichtet ist, unter Verwendung einer digitalen Bildanalyse die digitalen 2D-Bilder und die weiteren digitalen 2D-Bilder auszuwerten und die digitale 3D-Repräsentation der zu scannenden Person (204) zu bestimmen, wobei das Bestimmen der digitalen 3D-Repräsentation die folgenden Schritte aufweist:
- Bestimmen einer digitalen Ausgangsrepräsentation der zu scannenden Person (204);
- Erfassen einer Auswahl für einen Musterphänotyp;
- Bereitstellen einer digitalen 3D-Repräsentation für den ausgewählten Musterphänotyp; und
- Bestimmen der digitalen 3D-Repräsentation der zu scannenden Person (204), indem die digitale 3D-Repräsentation für den ausgewählten Musterphänotyp unter Berücksichtigung der digitalen Ausgangsrepräsentation i iterativ angepasst wird.

2. Verfahren nach Anspruch 1, **dadurch gekennzeichnet, dass** die Wandelementen (201, 202) als mobile Stellwände verwendet werden.

3. Verfahren nach Anspruch 1 oder 2, **dadurch gekennzeichnet, dass** die Wandelementen (201, 202) voneinander getrennt angeordnet werden.

4. Verfahren nach mindestens einem der vorangehenden Ansprüche, **dadurch gekennzeichnet, dass** die Wandelemente (201, 202) aus lösbar miteinander verbundenen Teilwandelementen zusammengesetzt werden.

5. Verfahren nach Anspruch 4, **dadurch gekennzeichnet, dass** an den Teilwandelementen die Kameramodule (110) entlang vertikaler Anordnungslinien verteilt und zwischen vertikalen Anordnungen von Kameramodulen (110) Beleuchtungseinrichtung zum Ausleuchten des Aufnahmeraums (203) angeordnet werden.

6. Verfahren nach mindestens einem der vorangehenden Ansprüche, **dadurch gekennzeichnet, dass** die den Aufnahmeraum (203) begrenzende Wand aus zwei Wandelementen (201, 202) bestehend hergestellt wird, die im Bereich des Eingangs (205) und des Ausgangs (206) voneinander getrennt sind.

7. Verfahren nach mindestens einem der vorangehenden Ansprüche, **dadurch gekennzeichnet, dass** die Kameramodule (11) jeweils in einer in die Wandelemente (201, 202) integrierte Aufnahmeeinheit (16) angeordnet werden.

8. Verfahren nach Anspruch 7, **dadurch gekennzeichnet, dass** die Aufnahmeeinheit (16) einen Mikrocontroller (18) aufweist, der mit einem oder mehreren der Kameramodule (110) datentechnisch verbunden wird und eingerichtet ist, das Bestimmen der 3D-Repräsentation der zu scannenden Person (204) wenigstens teilweise auszuführen.

9. Verfahren nach mindestens einem der vorangehenden Ansprüche, dadurch g e k e n n - **zeichnet**, dass die Kameramodule (110) mit einem zentralen Steuerrechner (24) datentechnisch verbunden werden, der eingerichtet ist, das Bestimmen der 3D-Repräsentation der zu scannenden Person (204) wenigstens teilweise auszuführen.

10. 3D-Scanvorrichtung zum Bestimmen einer digitalen 3D-Repräsentation einer Person gemäß einem Verfahren nach mindestens einem der vorangehenden Ansprüche, mit:
- einem Aufnahmeraum (203);
- Wandelementen (201, 202), die voneinander getrennt angeordnet sind und eine den Aufnahmeraum (203) begrenzende Wand bilden;
- einem Eingang (205) und einem Ausgang (206), die an entgegengesetzten Enden eines Wegs einer zu scannenden Person (204) durch den Aufnahmeraum (203) im Bereich der Wandelemente (201, 202) angeordnet sind;
- Kameramodulen (110), die über die Wandelemente (201, 202) verteilt angeordnet und eingerichtet sind, für die zu scannende Person (204) im Aufnahmeraum (203) aus unterschiedlichen Aufnahmerichtungen digitale 2D-Bilder aufzunehmen;
- einem oder mehreren Projektoren, die an den Wandelementen (201, 202) angeordnet und eingerichtet sind, für das Aufnehmen eines Teils der digitalen 2D-Bilder ein Projektions-muster auf die zu scannende Person (204) zu projizieren; und
- einer Auswerteinrichtung (24; 28), die mit den Kameramodulen (110) verbunden und eingerichtet ist, unter Verwendung einer digitalen Bildanalyse aus den digitalen 2D-Bildern der zu scannenden Person (204), weiche die zu scannende Person (204) mit und ohne das Projektionsmuster zeigen, gemäß einem Verfahren nach mindestens einem der vorangehenden Ansprüche eine digitale 3D-Repräsentation der zu scannenden Person (204) zu bestimmen.

## Claims

1. Method of determining a digital 3D representation of a person by means of a 3D scanning device, wherein the method comprises the following steps:
- provision of a 3D scanning device (200) in which a recording space (203) is surrounded by wall elements (201, 202);
- recording of digital 2D images of a person (204) to be scanned in the recording space (203) from different recording directions using camera modules (110) which are arranged distributed over the wall elements (201, 202);
- projecting a projection pattern onto the person (204) to be scanned in the recording space (203) by way of one or more projectors which are arranged on the wall elements (201, 202);
- recording of further 2D images of the person (204) to be scanned with the hereon projected projection pattern in the recording room (203) from the different recording directions with the aid of camera modules (110); and
- determining a 3D representation of the person (204) to the scanned by way of an evaluation device (24; 28) which is connected to the camera modules (110) and set up using digital image analysis to evaluate the digital 2D images and the further 2D images and to determine the digital 3D representation of the person (204) to be scanned, wherein determining the digital 3D representation comprises the following steps:
- determining a digital initial representation of the person (204) to be scanned;
- recording a selection for a sample phenotype;
- provision of a digital 3D representation for the selected sample phenotype; and
- determining the digital 3D representation of the person (204) to be scanned in that the digital 3D representation of the selected sample phenotype is iteratively adapted taking into account the digital initial representation.

2. Method according to claim 1 **characterised in that** the wall elements (201, 202) are used as mobile movable walls.

3. Method according to claim 1 or 2 **characterised in that** the wall elements (201, 202) are arranged separately from one another.

4. Method according to at least one of the preceding claims **characterised in that** the wall elements (201, 202) are composed of partial wall elements which are detachably connected to each other.

5. Method according to claim 4 **characterised in that** on the partial wall elements, the camera modules (110) are distributed along vertical arrangement lines and **in that** between vertical arrangements of camera modules (110), lighting devices are arranged for illuminating the recording space (203).

6. Method according to at least one of the preceding claims **characterised in that** the wall delimiting the recording space (203) is produced to consist of two wall elements (201, 202) which are separated from each other in the area of the entrance (205) and the exit (206).

7. Method according to at least one of the preceding claims **characterised in that** the camera modules (11) are each arranged in a recording unit (16) integrated into one of the wall elements (201, 202).

8. Method according to claim 7 **characterised in that** the recording unit (16) comprises a microcontroller (18) which is connected in terms of data to one or more of the camera modules (110) and is set up to at least partially carry out the determination of the 3D representation of the person (204) to be scanned.

9. Method according to at least one of the preceding claims **characterised in that** the camera modules (110) are connected in terms of data to a central control computer (24) which is set up to at least partially carry out the determination of the 3D representation of the person (204) to be scanned.

10. 3D scanning device for determining a digital 3D representation of a person in accordance with a method according to at least one of the preceding claims with:
- a recording space (203);
- wall elements (201, 202) which are arranged separately from one another and form a wall delimiting the recording space (203);
- an entrance (205) and an exit (206), which are arranged at opposite ends of a path of a person (204) to be scanned through the recording space (203) in the area of the wall elements (201, 202);
- camera modules (110) which are arranged distributed over the wall elements (201, 202) and are set up for recording digital 2D images of the person (204) to be scanned in the recording space (203) from different recording directions;
- one or more projectors which are arranged on the wall elements (201, 202) and are set up for projecting a projection pattern onto the person (204) to be scanned for recording a part of the digital 2D images; and
- an evaluation device (24; 28) which is connected to the camera modules (110) and is set up for determining a digital 3D representation of the person (204) to be scanned using a digital image analysis from the digital 2D images of the person (204) to be scanned which show the person (204) to be scanned with and without the projection pattern in accordance with a method according to at least one of the preceding claims.

## Revendications

1. Procédé, destiné à déterminer une représentation numérique en 3D d'une personne à l'aide d'un dispositif de scanner 3D, le procédé comportant les étapes suivantes :
- mettre à disposition un dispositif de scanner 3D (200), sur lequel un espace d'enregistrement (203) est entouré par des éléments de paroi (201, 202) ;
- enregistrer des images numériques en 2D d'une personne (204) qu'il s'agit de scanner dans l'espace d'enregistrement (203) à partir de différentes directions d'enregistrement à l'aide de modules de caméras (110), qui sont placés en étant distribués sur les éléments de paroi (201, 202) ;
- projeter un modèle de projection sur la personne (204) qu'il s'agit de scanner dans l'espace d'enregistrement (203) à l'aide d'un ou de plusieurs projecteurs qui sont placés sur les éléments de paroi (201, 202) ;
- enregistrer des images numériques en 2D supplémentaires de la personne (204) qu'il s'agit de scanner avec le modèle de projection projeté dessus dans l'espace d'enregistrement (203) à partir des différentes directions d'enregistrement à l'aide de modules de caméras (110) ; et
- déterminer une représentation numérique en 3D de la personne (204) qu'il s'agit de scanner à l'aide d'un dispositif d'évaluation (24 ; 28), qui est relié avec les modules de caméras (110) et adapté pour évaluer les images numériques en 2D et les images numériques en 2D supplémentaires en utilisant une analyse d'image numérique et pour déterminer la représentation numérique en 3D de la personne (204) qu'il s'agit de scanner, la détermination de la représentation numérique en 3D comportant les étapes suivantes :
- déterminer une représentation numérique initiale de la personne (204) qu'il s'agit de scanner ;
- détecter une sélection pour un phénotype modèle ;
- mettre à disposition une représentation numérique en 3D pour le phénotype modèle sélectionné ; et
- déterminer la représentation numérique en 3D de la personne (204) qu'il s'agit de scanner par adaptation itérative de la représentation numérique en 3D pour le phénotype modèle sélectionné, sous considération de la représentation numérique initiale.

2. Procédé selon la revendication 1, **caractérisé en ce qu'**on utilise les éléments de paroi (201, 202) en tant que cloisons mobiles.

3. Procédé selon la revendication 1 ou 2, **caractérisé en ce qu'**on place les éléments de paroi (201, 202) en étant séparés les uns des autres.

4. Procédé selon au moins l'une quelconque des revendications précédentes, **caractérisé en ce qu'**on assemble les éléments de paroi (201, 202) à partir d'éléments de paroi partiels, assemblés les uns aux autres de manière amovible.

5. Procédé selon la revendication 4, **caractérisé en ce que** sur les éléments de paroi partiels, les modules de caméras (110) sont placés en étant distribués le long de lignes de placement verticales et **en ce qu'**entre des agencements verticaux de modules de caméras (110), des dispositifs d'éclairage sont placés pour illuminer l'espace d'enregistrement (203).

6. Procédé selon au moins l'une quelconque des revendications précédentes, **caractérisé en ce que** la paroi qui délimite l'espace d'enregistrement (203) est fabriquée en consistant en deux éléments de paroi (201, 202) qui sont séparés l'un de l'autre dans la région de l'entrée (205) et de la sortie (206).

7. Procédé selon au moins l'une quelconque des revendications précédentes, **caractérisé en ce que** les modules de caméras (11) sont placés respectivement dans une unité d'enregistrement (16) intégrée dans les éléments de paroi (201, 202).

8. Procédé selon la revendication 7, **caractérisé en ce que** l'unité d'enregistrement (16) comporte un microcontrôleur (18) qui est relié par voie informatique avec un ou plusieurs des modules de caméras (110) et qui est adapté pour procéder au moins partiellement à la détermination de la représentation en 3D de la personne (204) qu'il s'agit de scanner.

9. Procédé selon au moins l'une quelconque des revendications précédentes, **caractérisé en ce qu'**on relie par voie informatiques les modules de caméras (110) avec un ordinateur de commande (24) centralisé qui est aménagé pour procéder au moins partiellement à la détermination de la représentation en 3D de la personne (204) qu'il s'agit de scanner.

10. Dispositif de scanner 3D, destiné à déterminer une représentation numérique en 3D d'une personne d'après un procédé selon au moins l'une quelconque des revendications précédentes, comprenant :
- un espace d'enregistrement (203) ;
- des éléments de paroi (201, 202), qui sont placés en étant séparés les uns des autres et qui forment une paroi délimitant l'espace d'enregistrement (203) ;
- une entrée (205) et une sortie (206), qui sont placées sur des extrémités opposées d'un trajet d'une personne (204) qu'il s'agit de scanner à travers l'espace d'enregistrement (203), dans la région des éléments de paroi (201, 202) ;
- des modules de caméras (110), qui sont placés en étant distribués sur les éléments de paroi (201, 202) et qui sont adaptés pour enregistrer des images numériques en 2D de la personne (204) qu'il s'agit de scanner à partir de différentes directions d'enregistrement dans l'espace d'enregistrement (203) ;
- un ou plusieurs projecteurs qui sont placés sur les éléments de paroi (201, 202) et qui sont adaptés pour projeter un modèle de projection sur la personne (204) qu'il s'agit de scanner pour enregistrer une partie des images numériques en 2D ; et
- un dispositif d'évaluation (24 ; 28), qui est relié avec les modules de caméras (110) et qui est adapté pour déterminer d'après un procédé selon au moins l'une quelconque des revendications précédentes une représentation numérique en 3D de la personne (204) qu'il s'agit de scanner, en utilisant une analyse d'images numérique, à partir des images numériques en 2D de la personne (204) qu'il s'agit de scanner, qui montrent la personne (204) à scanner avec et sans le modèle de projection.
